# FASCICULE DE BREVET EUROPEEN

(11) **EP 0 477 344 B1**
(45) Date de publication et mention de la délivrance du brevet: **12.07.1995**
(21) Numéro de dépôt: 91908256.0
(22) Date de dépôt: 10.04.1991
(51) Int. Cl.: F16K 27/02, B08B 9/34, B08B 101/08

(54) **DISPOSITIF DE COMMANDE D'ECOULEMENT**
VORRICHTUNG ZUR STEUERUNG DES FLÜSSIGKEITSZULAUFS
DEVICE FOR CONTROLLING FLOW

(30) Priorité: 11.04.1990 FR 9004654
(43) Date de publication de la demande: 01.04.1992
(73) Titulaire: PERRIER, René, 07160 Le Cheylard (FR); ETS. PERRIER, 07160 Le Cheylard (FR)
(72) Inventeur: Perrier, René, F-07160 Le Cheylard (FR)
(74) Mandataire: Derambure, Christian
(86) Numéro de dépôt international: FR9100294
(87) Numéro de publication internationale: WO9115691

(56) Documents cités:
- CH-A- 324 087
- FR-A- 2 098 782
- US-A- 3 941 410

## Description

La présente invention concerne un dispositif de commande d'écoulement pouvant fonctionner en robinet d'arrêt, en robinet de réglage de débit, ou encore en clapet, par exemple clapet anti-retour.

On connaît les robinets ou vannes dans lesquels une bille est prisonnière entre deux demi-corps et peut s'appliquer contre un siège formé sur l'un des demi-corps sous l'action d'un ressort de rappel, ou encore s'écarter de ce siège pour permettre l'écoulement à travers le corps, sous l'action de la pression du fluide ou encore sous l'action d'un moyen de commande.

Ces robinets connus ont l'inconvénient de présenter intérieurement de nombreux recoins dans lesquels peuvent se former des dépôts. Ces dépôts peuvent être préjudiciables au bon fonctionnement du robinet, et peuvent également polluer le fluide s'écoulant ultérieurement à travers le robinet, notamment lorsque ce fluide est une substance alimentaire, pharmaceutique ou autre. De plus, dans ce type de robinet, le bon fonctionnement n'est plus assuré lorsque le ressort est cassé ou a perdu ses propriétés élastiques initiales en raison notamment du contact avec le fluide traversant le robinet. Dans le cas où l'obturateur doit être commandé de l'extérieur, un joint à étanchéité dynamique doit être prévu entre l'un des demi-corps et l'organe de commande qui le traverse avec une certaine mobilité. Cette étanchéité dynamique doit être remplacée périodiquement, et sa présence se traduit par des recoins supplémentaires dans le trajet de l'écoulement du fluide.

Le but de l'invention est ainsi de proposer un dispositif de commande d'écoulement dont le trajet intérieur d'écoulement présente un minimum de relief.

Suivant l'invention, le dispositif de commande d'écoulement, comprenant deux demi-corps reliés l'un à l'autre avec interposition de moyens d'étanchéité annulaire et formant ensemble un corps définissant un trajet d'écoulement entre deux ouvertures appartenant chacune à l'un des demi-corps, un obturateur étant monté dans le trajet d'écoulement de manière mobile entre une position de fermeture dans laquelle il est appliqué sur un siège formé sur un premier des demi-corps, et une position d'ouverture dans laquelle il est écarté de ce siège, est caractérisé en ce que les deux demi-corps sont mobiles axialement l'un par rapport à l'autre, l'obturateur est monté entre le siège et l'ouverture du premier demi-corps et est fixé au second demi-corps à travers les moyens d'étanchéité annulaires, et en ce que les moyens d'étanchéité annulaires sont compressibles axialement.

Les mouvements de l'obturateur s'accompagnent de mouvements axiaux relatifs correspondants des deux demi-corps l'un par rapport à l'autre, moyennant variation de l'état de compression du joint entre les deux demi-corps. Il n'y a plus de moyens de rappel spécifiques, ni d'inconvénients liés à ceux-ci. La structure est simplifiée, et son entretien est facilité.

Une version avantageuse du dispositif selon l'invention comprend des moyens de rappel de l'obturateur en position de fermeture. Au titre de ces moyens d'étanchéité annulaires compressibles axialement soient compressibles élastiquement. Dans ces conditions, les moyens de rappel ne font plus obstacle à l'écoulement du fluide et ne constituent plus un piège propice à la formation de dépôt dans le dispositif de commande d'écoulement.

De préférence, les moyens d'étanchéité annulaires compressibles pour assurer le rappel de l'obturateur comprennent un manchon tubulaire définissant en son intérieur un conduit se raccordant de manière continue avec un conduit intérieur de chacun des demi-corps.

De préférence, lorsque le dispositif de commande d'écoulement comprend des moyens d'actionnement de l'obturateur, ceux-ci sont constitués par des moyens pour commander la position axiale relative des deux demi-corps.

Ainsi, le dispositif de commande d'écoulement est particulièrement avantageux car les moyens d'actionnement n'ont plus à traverser la paroi de l'un ou l'autre des demi-corps pour être reliés à l'obturateur. Il n'y a donc plus besoin d'étanchéité dynamique autour d'une tige d'actionnement de l'obturateur, ce qui supprime les coûts d'achat et d'entretien correspondants, les risques d'usure et de fuites, de même que tous les risques d'accumulation de dépôt au voisinage de ces moyens d'étanchéité dynamique.

D'autres particularités et avantages de l'invention ressortiront encore de la description ci-après de divers exemples non limitatifs.

Aux dessins annexés :
- la figure 1 est une vue schématique de dessus d'une machine de traitement à carrousel rotatif selon l'invention ;
- la figure 2 est une vue schématique en coupe axiale de la machine selon la ligne II-II de la figure 1 ;
- la figure 3 est une vue en élévation, avec coupe partielle, d'un dispositif de traitement de la machine des figures 1 et 2, la bouteille étant en position dressée ;
- la figure 4 est une vue analogue à la figure 3 mais lorsque la bouteille subit une injection en position renversée ;
- les figures 5 et 6 sont des vues en coupe axiale de la partie centrale du dispositif, au repos et respectivement en cours d'injection ; et
- la figure 7 est une vue schématique en perspective avec coupe partielle, d'un mélangeur sanitaire utilisant deux robinets selon l'invention.

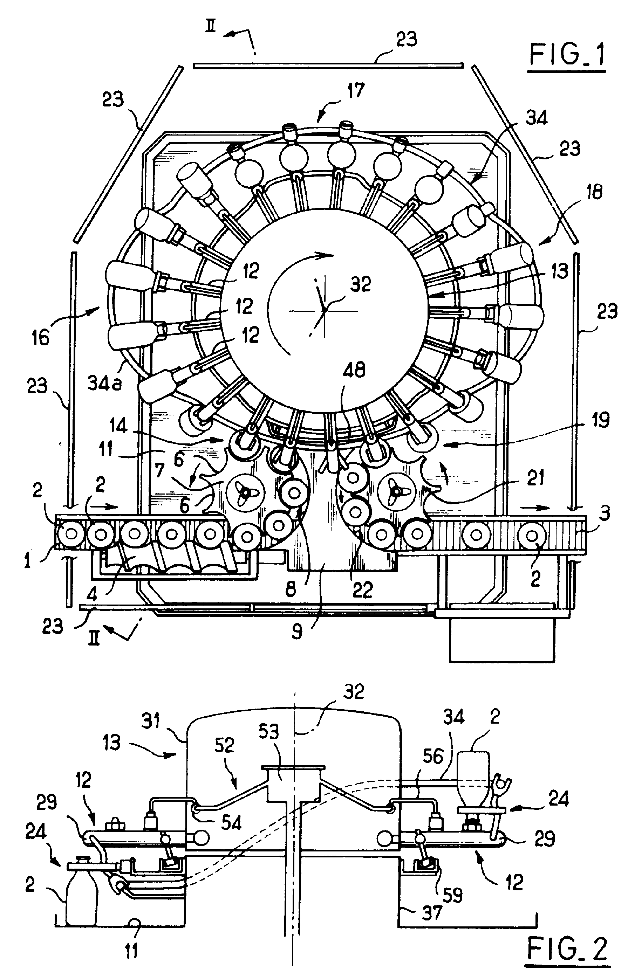

La machine représentée aux figures 1 et 2 est destinée à s'intercaler dans une chaîne de traitement de bouteilles. Elle comprend un convoyeur d'entrée 1 recevant les bouteilles 2 provenant de la partie amont de la chaîne et un convoyeur de sortie 3 qui achemine les bouteilles 2 vers la partie aval de la chaîne.

Le long du convoyeur d'entrée 1 est disposée une vis espaceuse 4, de type connu, qui donne aux bouteilles 2 successives un espacement et une vitesse de défilement prédéterminés de manière à synchroniser les bouteilles 2 avec des alvéoles 6 formés à la périphérie d'une étoile d'entrée 7. Les alvéoles 6 défilent au-dessus du convoyeur 1 et reçoivent les bouteilles successives 2 pour les propulser le long d'une trajectoire en demi-cercle définie par un bord de guidage 8 d'une plaque de guidage 9. Cette trajectoire en demi-cercle, le long de laquelle les bouteilles glissent par leur fond sur un plancher 11, fait passer les bouteilles 2 du convoyeur d'entrée 1 à des dispositifs de traitement de bouteilles 12 montés selon une répartition en couronne sur la paroi latérale extérieure d'un carrousel rotatif 13. Le long de la périphérie du carrousel 13, les dispositifs de traitement ont entre eux un espacement circonférentiel correspondant à l'intervalle entre bouteilles successives sur l'étoile 7.

Par la rotation du carrousel 13, les dispositifs de traitement 12 passent successivement par un poste 14 de préhension des bouteilles, un poste 16 de renversement des bouteilles, un poste 17 d'injection, un poste 18 de redressement des bouteilles et d'égouttage et un poste 19 de transfert des bouteilles traitées à une étoile de sortie 21 qui est analogue à l'étoile d'entrée 7 et fait passer les bouteilles traitées du poste de transfert 19 au convoyeur de sortie 3 selon une trajectoire en demi-cercle le long de laquelle les bouteilles glissent par leur fond sur le plancher 11 et suivent un autre bord courbe de guidage 22 de la plaque 9.

De préférence, les convoyeurs de sortie 2 et 3 sont constitués physiquement par un seul et même convoyeur au-dessus duquel est fixée la plaque 9.

La machine est protégée et insonorisée par des panneaux périphériques 23 dont certains au moins sont transparents et/ou peuvent s'ouvrir pour permettre l'entretien et les inspections détaillées.

Comme le montrent les figures 2 à 4, chaque dispositif de traitement comprend une pince 24 qui a pour fonction de saisir par le goulot la bouteille 2 qui se présente à elle au poste de préhension, puis de manipuler la bouteille au cours des opérations de renversement et de redressement, et enfin de relâcher la bouteille au poste de transfert 19.

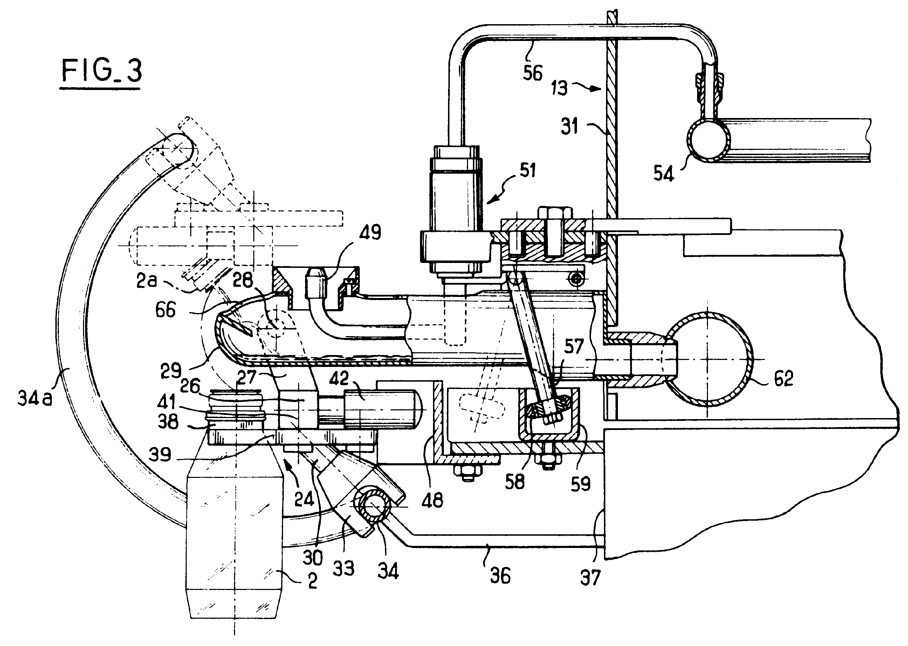

Chaque pince de préhension comporte ainsi un corps de pince 26 en forme de chape comprenant deux bras 27 articulés selon un axe commun 28 sensiblement horizontal à deux côtés opposés d'un corps 29 du dispositif de traitement. Le corps 29 est fixé au bâti rotatif 31 du carrousel (figures 2 et 3) et il est allongé radialement vers l'extérieur à partir du bâti rotatif 21 par rapport à l'axe de rotation sensiblement vertical 32 du carrousel 13. L'axe 28 est situé au voisinage de l'extrémité radialement extérieure du corps 29. L'axe 28 est appelé axe de renversement car c'est autour de cet axe que les bouteilles 2 pivotent pour leurs mouvements de renversement et de redressement. A cet effet, le corps de pince 26 porte un doigt 30 terminé par une fourchette 33 réalisée de préférence en matière plastique à faible coefficient de frottement et bonne résistance à l'usure. Dans la fourchette 33 est engagée une barre de commande de mouvement 34. Comme le montre la figure 1, la barre de commande de mouvement 34 s'étend autour du carrousel 13 et, comme le montre la figure 3, elle est fixée par exemple par des pattes 36, au bâti fixe 37 qui est situé sous le bâti rotatif 31 et supporte ce dernier en rotation.

Dans la représentation de la figure 3, la rampe de commande de mouvement 34 est vue comme si, à partir du plan de coupe de la figure 3, la direction du regard de l'observateur était non pas une droite perpendiculaire au plan de la figure mais une courbe centrée sur l'axe de rotation du carrousel. C'est ainsi que la partie 34a de la rampe 34 qui commande le mouvement de renversement des bouteilles 2, et qui est en réalité une hélice à axe circulaire, apparaît sur la figure 3 comme étant un demi-cercle centré sur l'axe de renversement 28.

La pince 24 comprend deux mors 38 en matière plastique fixés chacun à une branche rigide 39. Les deux branches 39 sont articulées au corps 26 selon deux axes 41 parallèles entre eux et perpendiculaires à l'axe de renversement 28. Les mors 38 sont commandés par un coulisseau 42 entre une position de préhension, dans laquelle ils sont relativement proches l'un de l'autre et peuvent retenir entre eux le goulot d'une bouteille, et une position de relâchement, dans laquelle ils sont relativement éloignés l'un de l'autre et permettent au goulot d'une bouteille de s'engager entre eux en provenance de l'étoile d'entrée 7 ou de se dégager d'eux pour être capté par l'étoile de sortie 21. Le coulisseau 42 est rappelé par un ressort non représenté vers la position de préhension (situation représentée à la figure 3) sauf si une came 48 le repousse vers le corps 26, ce qui fait passer les mors 26 en position de relâchement.

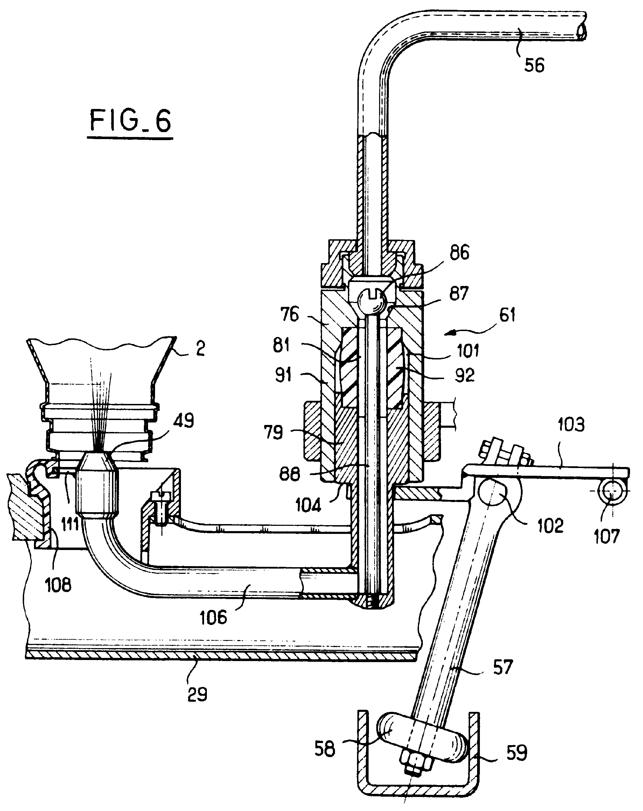

Comme le montre la figure 1, la came 48 n'est présente que dans la région du pourtour du carrousel 13 dans laquelle les mors de pince de chaque dispositif de traitement doivent être déplacés de la position de préhension à la position de relâchement (poste de transfert 19), maintenus dans la position de relâchement (passage du poste de transfert au poste de préhension), puis ramenés en position de préhension (poste de préhension 14). Le long du reste du pourtour du carrousel 13, comme représenté également en haut de la figure 6, le ressort de rappel 45 maintient le coulisseau 42 dans la position dans laquelle les mors 38 sont appuyés contre le goulot 2 d'une bouteille en cours de traitement.

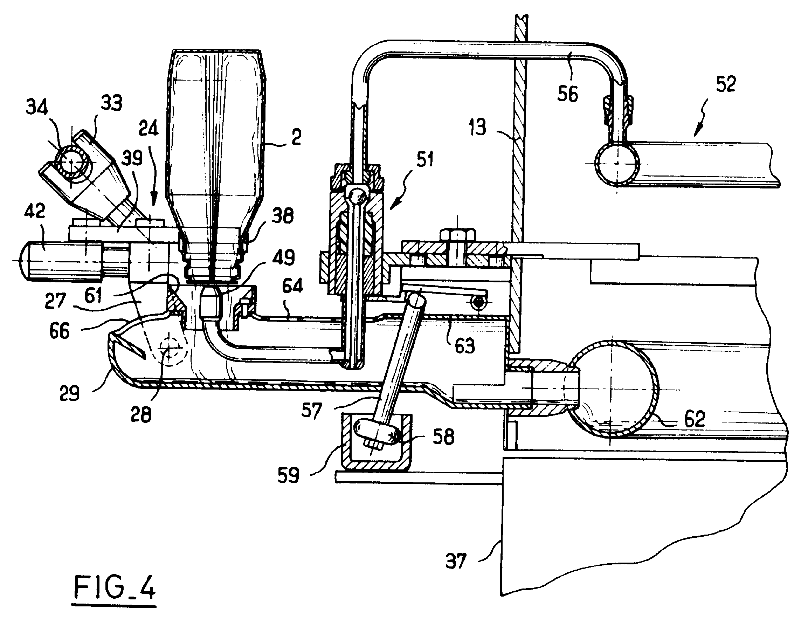

Ainsi, comme représenté à la figure 3, chaque pince 24 est capable de saisir une bouteille 2 en position dressée sous le corps 29 et de la faire pivoter de 180° autour de l'extrémité libre du corps 29 sous la commande de la barre de commande 34 pour amener la bouteille en une position renversée (figure 4) dans laquelle son goulot se trouve juste au-dessus d'une buse d'injection de fluide 49. La buse 49 est reliée par l'intermédiaire d'une vanne 51 fixée au corps 29, à un dispositif d'alimentation sous pression 52 installé à l'intérieur du carrousel 13 et qui peut comprendre par exemple une pompe 53 (figure 2) débitant dans une conduite annulaire 54 à laquelle sont reliés tous les raccordements 56 aux vannes 51 de tous les dispositifs de traitement 12 de la machine.

Chaque vanne 51 est commandée par un levier 57 qui est mobile entre une position de fermeture de la vanne, représentée à la figure 3, et une position d'ouverture de la vanne représentée à la figure 4. Le levier porte à son extrémité un galet 58 qui est engagé dans un rail de commande 59, en forme de U, qui est fixé au bâti fixe 37 de la machine et s'étend autour de ce dernier, comme cela est visible à la figure 1. Le rail de commande 59 est circulaire centré sur l'axe 32 du carrousel rotatif sauf le long du poste d'injection 17, de manière à faire passer chaque vanne 51 en position d'ouverture au poste d'injection 17 et à la maintenir en position fermée le long de tous les autres postes de la machine de traitement.

Par conséquent, lorsqu'une bouteille 2 est au poste d'injection, comme cela est représenté à la figure 4, la buse 49 envoie un jet de fluide à l'intérieur de la bouteille 2 renversée, à travers son goulot. Ce fluide frappe la paroi intérieure de la bouteille 2 et ruisselle le long de celle-ci avant de quitter la bouteille 2 à travers le goulot de cette dernière.

Le fluide qui s'écoule ainsi est recueilli à travers une goulotte 61 qui se trouve juste en-dessous du goulot de la bouteille 2 et qui entoure la buse 49 avec un certain écartement radial entre la paroi extérieure de la buse 49 et la paroi intérieure de la goulotte 61. L'ouverture définie par la goulotte 61 donne accès à l'intérieur du corps 29 lequel constitue un réceptacle individuel pour la collecte du fluide retombant de la bouteille 2.

Par l'expression "réceptacle individuel" on entend désigner un réceptacle de relativement petite taille affecté à un seul dispositif de traitement et tournant avec le carrousel 13 pour rester sous le goulot des bouteilles 2 en cours de traitement, notamment le long du poste d'injection 17.

A son extrémité radialement intérieure, le réceptacle 29 communique avec un collecteur annulaire 62 monté dans le carrousel rotatif 13 pour recueillir en provenance de tous les réceptacles 29 le liquide retombant des bouteilles 2.

Dans l'exemple représenté, ce fluide est un liquide. Il peut s'agir d'un liquide de rinçage tel que de l'eau qui, à partir du collecteur 62 sera conduit à l'égout. Il peut encore s'agir d'un liquide d'enduction des bouteilles, de valeur pécuniaire relativement élevée, et qui, à partir du collecteur 62, sera conduit via un dispositif de filtration et de recyclage vers la pompe 53 (figure 2). De manière non représentée, le fluide injecté par la buse 49 peut être un gaz qu'on ne souhaite pas répandre en quantité importante dans l'atmosphère, auquel cas le collecteur 62 est relié à une source d'aspiration.

Le réceptacle 29 comporte une fermeture supérieure 63 dans laquelle sont ménagées, outre l'ouverture définie par la goulotte 61, une ouverture 64 dans laquelle est engagée la base de la vanne 51, et une ouverture de collecte d'égouttage 66. Cette dernière est aménagée dans l'extrémité radialement extérieure du réceptacle 29, c'est-à-dire l'extrémité du réceptacle 29 qui est entourée par la trajectoire de la pince 24 et de la bouteille 2 qu'elle porte entre les positions dressée et renversée de cette dernière. On a représenté en trait mixte à la figure 3 une position 2a prise par la bouteille 2 au cours de son trajet retour depuis la position renversée jusqu'à la position dressée le long du poste de redressement des bouteilles 18 de la figure 1. La position 2a, inclinée à moins de 90° par rapport à la position renversée, favorise l'égouttage de la bouteille suite à l'injection subie le long du poste d'injection et le réceptacle 29 recueille le produit de cet égouttage à travers l'ouverture 66.

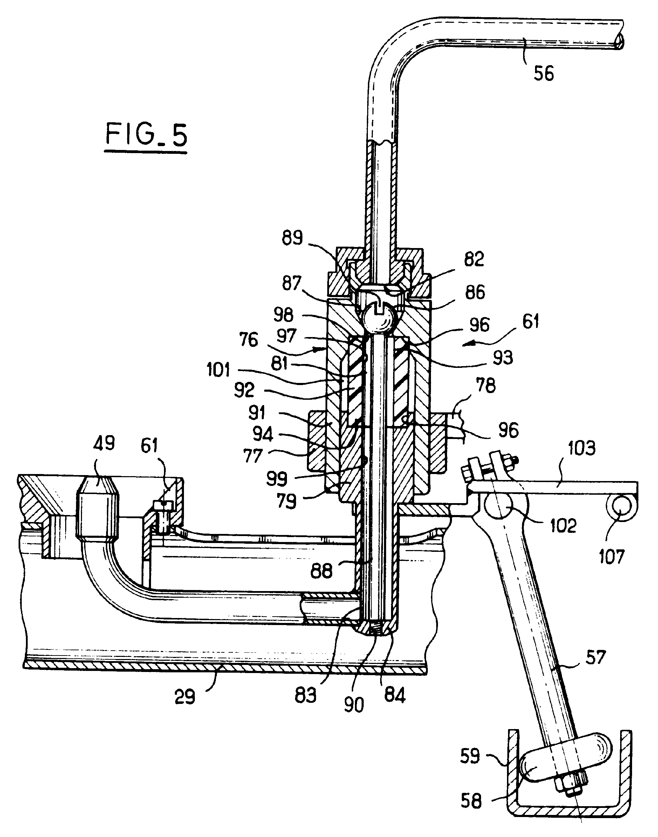

On va maintenant décrire en détail en référence aux figures 5 et 6 la vanne 51.

La vanne 51 comprend un demi-corps fixe 76 de forme générale tubulaire qui est fixé au corps-réceptacle 29 par l'intermédiaire d'un collier 77 et d'une patte 78. A l'une de ses extrémités, le demi-corps fixe 76 est raccordé de manière étanche au raccordement 56. L'autre extrémité du demi-corps fixe 76 est conformée en jupe 91 dans laquelle un demi-corps mobile 79 est monté de manière axialement coulissante. Les deux demi-corps 76 et 79 forment ensemble un corps de vanne définissant un trajet d'écoulement 81 entre une ouverture 82 appartenant au demi-corps fixe 76 et faisant communiquer celui-ci avec le raccordement 56, et une ouverture 83 formée à travers la paroi latérale du demi-corps mobile 79 dont l'extrémité opposée au demi-corps fixe 76 est fermée par une paroi d'extrémité 84.

La vanne 51 comprend en outre un obturateur sphérique 86 monté dans le demi-corps fixe 76 entre l'ouverture 82 de ce dernier et un siège 87 de forme générale conique formé sur la paroi intérieure du demi-corps fixe 76 de manière à s'évaser vers l'ouverture 82, c'est-à-dire en direction opposée à l'autre demi-corps. L'obturateur sphérique 86 est fixé rigidement à l'une des extrémités d'une tige axiale 88 dont l'autre extrémité est vissée de manière étanche dans un trou taraudé 90 de la paroi d'extrémité 84 du demi-corps mobile 79. Pour opérer ce vissage lors du montage, l'obturateur 86 présente du côté tourné vers l'ouverture 82 une fente 89 dans laquelle on peut introduire l'extrémité d'un tournevis lorsqu'on n'a pas encore effectué la liaison avec le raccordement 56. La tige 88 s'étend ainsi à travers une partie du demi-corps fixe 76 et à travers toute la longueur axiale du demi-corps mobile 79.

Par coulissement du demi-corps mobile 79 dans la jupe terminale 91 du demi-corps fixe 76, l'obturateur 86 est mobile entre la position de fermeture représentée à la figure 5, dans laquelle il est appuyé de manière étanche contre le siège 87, et une position d'ouverture représentée à la figure 6 dans laquelle il est écarté du siège 87 alors que le demi-corps mobile 79 est dans une position rétractée à l'intérieur de la jupe 91.

La vanne 51 comprend en outre des moyens de rappel de l'obturateur 86 en position de fermeture et des moyens d'étanchéité entre les deux demi-corps 76 et 79. Ces moyens de rappel et d'étanchéité sont constitués par une même pièce, à savoir un manchon en matière plastique silicone 92 qui est monté autour de la tige 88 avec entre eux un espacement annulaire définissant une partie du trajet d'écoulement 81. Le manchon est inséré axialement entre un épaulement annulaire 93 du demi-corps fixe 76 et un épaulement annulaire 94 du demi-corps mobile 79. Le manchon 92 est comprimé élastiquement en direction axiale entre les épaulements 93 et 94, ce qui a pour effet de l'appuyer de manière étanche sur chacun des deux épaulements 93 et 94, et de solliciter axialement l'un à l'écart de l'autre les deux demi-corps 76 et 79, donc d'appliquer l'obturateur 86 sur son siège 87 sous un effort qui correspond sensiblement à l'effort de compression élastique du manchon dans cette position relative des deux demi-corps.

Chaque demi-corps 76 et 79 présente autour de son épaulement 93 et respectivement 94 une surface de centrage 96 coopérant avec l'extrémité correspondante de la surface latérale extérieure du manchon 92 pour centrer celui-ci sur l'axe général de la vanne 61. Le manchon 92 comporte une surface intérieure cylindrique 97 s'étendant sur toute sa longueur axiale et qui a même diamètre que des alésages 98 et 99 adjacents au manchon et appartenant aux demi-corps 76 et respectivement 79. Ainsi, ladite surface intérieure 97 se raccorde de manière continue avec les alésages 98 et 99 pour donner au trajet d'écoulement, entre l'obturateur 86 et l'ouverture 83 une configuration lisse de section annulaire, la tige 88 étant elle-même cylindrique avec un diamètre inférieur au diamètre intérieur de la paroi 97 et des alésages 98 et 99.

Un dégagement 101 est ménagé autour du manchon 92 entre les deux surfaces de centrage 96 pour permettre au manchon 92 de gonfler légèrement vers l'extérieur lorsque, comme représenté à la figure 6, il est comprimé axialement pour faire passer l'obturateur 86 en position d'ouverture.

Dans l'exemple représenté, le manchon 92 a une surface extérieure qui est cylindrique et coaxiale avec sa surface intérieure cylindrique 97, de sorte que le manchon 92 peut être réalisé par tronçonnage d'un simple tube en matière plastique silicone.

Pour commander le passage de l'obturateur 86 en position d'ouverture à l'encontre de l'effet de rappel exercé par le manchon 92, le levier d'actionnement 57 est axialement solidaire d'une came 102 qui provoque sélectivement le déplacement d'un levier 103 qui a un axe 107 solidaire du réceptacle 29 et qui est appuyé à distance de l'axe 107 sur un épaulement 104 du demi-corps mobile 79.

Comme le montre encore la figure 6, lorsque le demi-corps 79 est actionné dans le sens de l'ouverture de l'obturateur 86, il en résulte un mouvement vers le haut de la buse 49 qui est reliée rigidement au demi-corps mobile 79 de façon à communiquer de manière étanche avec l'ouverture 83. Ceci peut faire légèrement pénétrer la buse 49 dans le goulot de la bouteille 2 et renforce la précision de l'injection.

Comme représenté en demi-vue à la figure 6, on peut envisager d'adapter dans la goulotte 61 un soufflet d'étanchéité 108 dont la partie mobile est soutenue par une bague rigide 109 reliée à la buse 49 par des barrettes rigides 111. Quand la buse 49 monte avec le demi-corps 79, elle vient appliquer de manière étanche le soufflet 108 contre le goulot de la bouteille, comme représenté. Ceci est avantageux lorsque le fluide utilisé est un gaz que l'on désire collecter dans le réceptacle 29 par aspiration.

Un conduit 106 qui relie la buse 49 à l'ouverture 83 s'étend librement à l'intérieur du corps-réceptacle 29.

La vanne 51 présente l'intérêt d'avoir un trajet d'écoulement 81 lisse, très peu propice aux accumulations de dépôt, et de ne pas comporter d'étanchéité dynamique pour la commande de la vanne, c'est-à-dire de ne pas nécessiter que l'un des demi-corps soit traversé de manière étanche par un organe de commande de l'obturateur.

On va maintenant exposer le fonctionnement de la machine de traitement :

Les bouteilles 2 acheminées par le convoyeur d'entrée 1 et convenablement espacées par la vis espaceuse 4 sont remises par l'étoile d'entrée 7 aux dispositifs de traitement 12 successifs. La came 48 commande la fermeture de chaque pince 24 au moment où l'étoile d'entrée 7 a placé une bouteille entre ses mors.

Après fermeture d'une pince, la barre de guidage 34 commande par sa région hélicoïdale 34a le renversement progressif de la bouteille 2 considérée, ce renversement s'achevant au début du poste d'injection 17, peu avant que le rail de commande 59 ne commande l'ouverture de la vanne 51 et par conséquent l'injection de fluide à travers la buse 49. Après l'injection, la bouteille est maintenue un certain temps en position renversée pour lui permettre de s'égoutter, puis la barre de commande 34 commande le redressement de la bouteille le long du poste de redressement 18 jusqu'à ce que la bouteille vienne se loger dans l'un des alvéoles de l'étoile de sortie 21, à la suite de quoi la came 48 commande l'ouverture de la pince pour permettre à la bouteille d'être conduite du poste de transfert 19 au convoyeur de sortie 3.

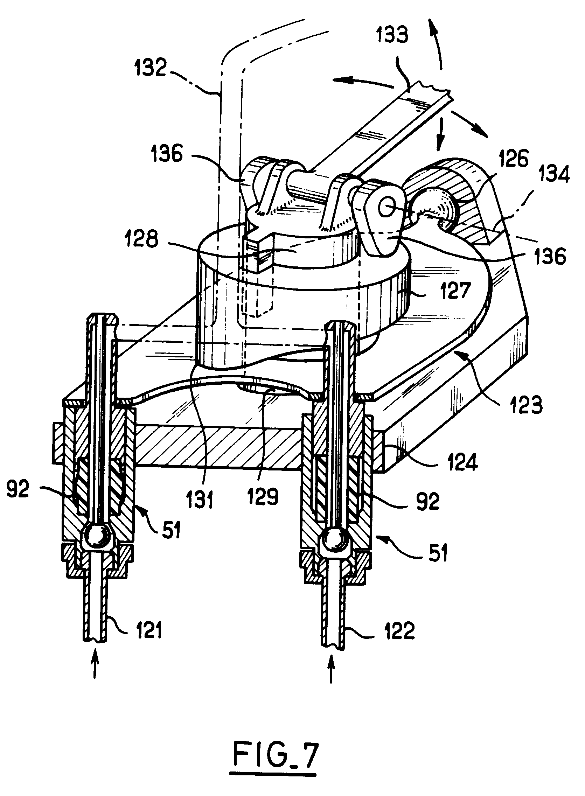

Dans l'exemple de la figure 7, le mélangeur sanitaire comprend deux vannes 51 identiques à celle des figures 5 et 6 qui sont montées parallèlement l'une à l'autre et commandant l'une un conduit d'eau froide 121 et l'autre un conduit d'eau chaude 122. Les vannes 51 sont commandées par un même levier 123 articulé à un bâti 124 par une rotule 126 située à égale distance des deux demi-corps mobiles 79 sur lesquels s'appuie le levier.

Une came cylindrique 127 est montée à coulisse, sans possibilité de tourner, sur un axe 128 supporté en rotation dans un alésage 129 du corps 124. La partie active de la came 127 s'appuie sur le levier 123 en un point 131 qui varie en fonction de la position angulaire de l'axe 128 et qui est ainsi plus ou moins proche de l'un des demi-corps 79 et, respectivement, moins ou plus proche de l'autre demi-corps 79.

Si comme représenté à titre d'exemple le point 131 est proche de la vanne 51 du conduit 121 le manchon 92 correspondant est davantage comprimé que l'autre et l'eau fournie au tube de sortie commun 132 est relativement fraîche.

Une manette de commande 133 articulée à l'axe 128 selon un axe diamétral 134 permet de faire tourner l'axe 128 pour régler ainsi la température de l'eau fournie par le tube de sortie 132.
La manette 133 est solidaire de deux cames de réglage de débit opposées 136 qui, lorsque la manette 133 pivote autour de son axe diamétral 134, enfoncent plus ou moins la came cylindrique 127 vers le levier 123 de manière à comprimer plus ou moins, ensemble, les deux manchons 92 pour régler le débit sans faire varier sensiblement la température du mélange.

## Revendications

1. Dispositif de commande d'écoulement, comprenant deux demi-corps (76, 79) reliés l'un à l'autre avec interposition de moyens d'étanchéité annulaires (92) et formant ensemble un corps définissant un trajet d'écoulement (81) entre deux ouvertures (82, 83) appartenant chacune à l'un des demi-corps, un obturateur (86) étant monté dans le trajet d'écoulement (81) de manière mobile entre une position de fermeture dans laquelle il est appliqué sur un siège (87) formé sur un premier (76) des demi-corps, et une position d'ouverture dans laquelle il est écarté de ce siège, caractérisé en ce que les deux demi-corps (76, 79) sont mobiles axialement l'un par rapport à l'autre, l'obturateur (86) est monté entre le siège (87) et l'ouverture (82) du premier demi-corps (76) et est fixé au second demi-corps à travers les moyens d'étanchéité annulaires (92), et en ce que les moyens d'étanchéité annulaires (92) sont compressibles axialement.

2. Dispositif selon la revendication 1, caractérisé en ce qu'il comprend en outre des moyens de rappel de l'obturateur (86) en position de fermeture.

3. Dispositif conforme à la revendication 2, caractérisé en ce qu'au titre des moyens de rappel, les moyens d'étanchéité annulaires compressibles axialement sont compressibles élastiquement.

4. Dispositif selon l'une des revendications 1 à 3 caractérisé en ce que les moyens d'étanchéité annulaires comprennent un manchon tubulaire (92) définissant en son intérieur un conduit (97) se raccordant de manière continue avec un conduit intérieur (98, 99) de chacun des demi-corps.

5. Dispositif selon la revendication 4, caractérisé en ce qu'un diamètre intérieur du manchon (92) est égal à un diamètre intérieur d'alésage que présente chacun des demi-corps (76, 79) de part et d'autre du manchon (92) pour définir le trajet d'écoulement (81).

6. Dispositif selon l'une des revendications 4 ou 5, caractérisé en ce que le manchon (92) est en silicone.

7. Dispositif selon l'une des revendications 4 à 6, caractérisé en ce que le manchon (92) est un tube à diamètre intérieur et à diamètre extérieur constants.

8. Dispositif selon l'une des revendications 1 à 7, caractérisé en ce que l'obturateur (86) est relié audit second demi-corps (79) par une tige (88) s'étendant de manière sensiblement axiale dans le trajet d'écoulement (81).

9. Dispositif selon l'une des revendications 1 à 8, caractérisé en ce que l'obturateur (86) est sphérique.

10. Dispositif selon l'une des revendications 1 à 9, caractérisé en ce que l'obturateur porte sur sa face tournée vers l'ouverture du premier demi-corps un moyen de prise (89) pour un outil permettant de faire tourner l'obturateur (86) et son moyen (88) de liaison à l'autre demi-corps (79), pour fixer le moyen de liaison dans des moyens conjugués (90) portés par le second demi-corps.

11. Dispositif selon l'une des revendications 1 à 10, caractérisé en ce que l'un des demi-corps (76) comporte une jupe (91) qui entoure l'autre demi-corps (79).

12. Dispositif selon l'une des revendications 1 à 11, caractérisé en ce que le moyen de liaison entre l'obturateur (89) et le second demi-corps (79) est une tige axiale (88) fixée à une paroi d'extrémité (84) du second demi-corps (79), l'ouverture (83) de ce dernier étant latérale.

13. Dispositif selon l'une des revendications 1 à 12, comprenant des moyens d'actionnement de l'obturateur, caractérisé en ce que les moyens (57, 59, 102, 103) d'actionnement de l'obturateur sont des moyens pour commander la position axiale relative des deux demi-corps (76, 79).

## Patentansprüche

1. Vorrichtung zur Ausflußsteuerung mit zwei Halbkörpern (76, 79), die unter Zwischenfügung von ringförmigen Abdichtmitteln (92) miteinander verbunden sind und zusammen einen Körper formen, der eine zwischen zwei Öffnungen (82, 83) verlaufende Strömungsbahn (81) festlegt, wobei jede der Öffnungen zu einem der Halbkörper gehört, wobei einem Verschlußorgan (86), das in der Strömungsbahn (81) zwischen einer Schließposition, in der es an einem ersten (76) der Halbkörper gebildeten Sitz (87) anliegt, und einer Öffnungsposition, in der es von diesem Sitz entfernt ist, beweglich angebracht ist, dadurch gekennzeichnet, daß die beiden Halbkörper (76, 79) zueinander axialbeweglich sind, daß das Verschlußorgan (86) zwischen dem Sitz (87) und der Öffnung (82) des ersten Halbkörpers (76) angebracht ist und mit dem zweiten Halbkörper über ringförmige Dichtmittel (92) befestigt ist und daß die ringförmigen Dichtmittel (92) in Axialrichtung kompressibel sind.

2. Vorrichtung nach Anspruch 1, dadurch gekennzeichnet, daß sie ferner Mittel zum Zurückstellen des Verschlußorgans (86) in die Schließposition aufweist.

3. Vorrichtung nach Anspruch 2, dadurch gekennzeichnet, daß die axial kompressiblen, ringförmigen Abdichtmittel als Rückstellmittel elastisch kompressibel sind.

4. Vorrichtung nach einem der Ansprüche 1 bis 3, dadurch gekennzeichnet, daß die ringförmigen Abdichtmittel eine rohrförmige Muffe (92) aufweisen, die in ihrem Inneren eine Leitung (97) bildet, die sich kontinuierlich an eine Innenleitung (98, 99) eines jeden der Halbkörper anschließt.

5. Vorrichtung nach Anspruch 4, dadurch gekennzeichnet, daß ein Innendurchmesser der Muffe (92) gleich einem Innendurchmesser der Bohrung in jedem der Halbkörper (76, 79) beiderseits der Muffe (92) ist, damit die Strömungbahn (81) gebildet wird.

6. Vorrichtung nach einem der Ansprüche 4 oder 5, dadurch gekennzeichnet, daß die Muffe (92) aus Silicon besteht.

7. Vorrichtung nach einem der Ansprüche 4 bis 6, dadurch gekennzeichnet, daß die Muffe (92) ein Rohr mit konstantem Innendurchmesser und konstantem Außendurchmesser ist.

8. Vorrichtung nach einem der Ansprüche 1 bis 7, dadurch gekennzeichnet, daß das Verschlußorgan (86) mit den Halbkörpern (79) über eine Stange (88) verbunden ist, die sich im wesentlichen axial in der Strömungsbahn (81) erstreckt.

9. Vorrichtung nach einem der Ansprüche 1 bis 8, dadurch gekennzeichnet, daß das Verschlußorgan (86) kugelförmig ist.

10. Vorrichtung nach einem der Ansprüche 1 bis 9, dadurch gekennzeichnet, daß das Verschlußorgan an seiner zur Öffnung des ersten Halbkörpers gewandt Fläche ein Aufnahmemittel (89) für ein Werkzeug trägt, mit dessen Hilfe das Verschlußorgan (86) und dessen Verbindungsmittel (88) mit dem anderen Halbkörper (79) gedreht werden kann, um das Verbindungsmittel in zugeordneten Mitteln (90) zu befestigen, die vom zweiten Halbkörper getragen werden.

11. Vorrichtung nach einem der Ansprüche 1 bis 10, dadurch gekennzeichnet, daß einer der Halbkörper (76) einen Mantel (91) aufweist, der den anderen Halbkörper (79) umgibt.

12. Vorrichtung nach einem der Ansprüche 1 bis 11, dadurch gekennzeichnet, daß das Verbindungsmittel zwischen dem Verschlußorgan (89) und dem zweiten Halbkörper (79) eine axial verlaufende Stange (88) ist, die an einer Endwand (84) des zweiten Halbkörpers (79) befestigt ist, wobei dessen Öffnung (83) seitlich verläuft.

13. Vorrichtung nach einem der Ansprüche 1 bis 12 mit Betätigungsmitteln für das Verschlußorgan, dadurch gekennzeichnet, daß die Betätigungsmittel (57, 59, 102, 103) für das Verschlußorgan Mittel zum Steuern der relativen axialen Position der zwei Halbkörper (76, 79) sind.

## Claims

1. Flow control device comprising two half-bodies (76, 79) connected to one another with the interposition of annular sealing means (92) and forming together a body defining a flowpath (81) between two openings (82, 83), each of which is associated with one of the half-bodies, while a closure means (86) is mounted in the flowpath (81) for movement between a closed position, in which it is applied against a seat (87) formed on a first half-body (76), and an open position in which it is distant from said seat, characterised in that the two half-bodies (76, 79) are axially movable relatively to one another, the closure means (86) is mounted between the seat (87) and the opening (82) of the first half-body (76) and is connected to the second half-body through the annular sealing means (92), and in that the annular sealing means (92) are axially compressible.

2. Device according to claim 1, characterised in that it also includes means for returning the closure means (86) to the closed position.

3. Device according to claim 2, characterised in that in order to serve as return means the axially compressible annular sealing means are elastically compressible.

4. Device according to one of claims 1 to 3, characterised in that the annular sealing means comprise a tubular sleeve (92) defining in its interior a duct (97) connected in a continuous manner to an internal duct (98,99) in each of the half-bodies.

5. Device according to claim 4, characterised in that an inside diameter of the sleeve (92) is equal to an inside bore diameter provided in each of the half-bodies (76, 79) on each side of the sleeve (92) in order to define the flowpath (81).

6. Device according to one of claims 4 or 5, characterised in that the sleeve (92) is of silicone.

7. Device according to one of claims 4 to 6, characterised in that the sleeve (92) is a tube having constant inside diameter and outside diameter.

8. Device according to one of claims 1 to 7, characterised in that the closure means (86) is connected to said second half-body (79) by a rod (88) extending substantially axially in the flowpath (81).

9. Device according to one of claims 1 to 8, characterised in that the closure means (86) is spherical.

10. Device according to one of claims 1 to 9, characterised in that the closure means carries on its face turned towards the opening of the first half-body a gripping means (89) for a tool permitting the turning of the closure means (86) and its means (88) of connection to the other half-body (79), in order to fix the connection means in paired means (90) carried by the second half-body.

11. Device according to one of claims 1 to 10, characterised in that one of the half-bodies (76) is provided with a skirt (91) surrounding the other half-body (79).

12. Device according to one of claims 1 to 11, characterised in that the means of connection between the closure means (89) and the second half-body (79) is an axial rod (88) fixed to an end wall (84) of the second half-body (79), the opening (83) of the latter being lateral.

13. Device according to one of claims 1 to 12, comprising means for actuating the closure means, characterised in that the means (57, 59, 102, 103) for actuating the closure means are means for controlling the relative axial position of the two half-bodies (76, 79).
